# NEUE EUROPÄISCHE PATENTSCHRIFT

(11) **EP 0 621 427 B2**
(45) Veröffentlichungstag und Bekanntmachung des Hinweises auf die Entscheidung über den Einspruch: **18.08.1999**
(45) Hinweis auf die Patenterteilung: 05.06.1996
(21) Anmeldenummer: 94103499.3
(22) Anmeldetag: 08.03.1994
(51) Int. Cl.: F16K 35/02

(54) **Mengenregulierventil**
Flow control valve
Vanne de réglage de débit

(30) Priorität: 19.03.1993 DE 4308762
(43) Veröffentlichungstag der Anmeldung: 26.10.1994
(73) Patentinhaber: FRIEDRICH GROHE AKTIENGESELLSCHAFT, D-58675 Hemer (DE)
(72) Erfinder: Humpert, Jürgen, D-58675 Hemer (DE); Frankholz, Christian, D-58239 Schwerte (DE); Heimann, Bruno, D-58730 Fröndenberg (DE); Hochstein, Detlef, D-58675 Hemer (DE)

(56) Entgegenhaltungen:
- EP-A- 0 000 878
- DE-A- 3 127 738
- DE-A- 3 402 103
- DE-C- 1 161 460
- DE-U- 9 300 841
- US-A- 4 089 347

## Beschreibung

Die Erfindung betrifft ein Mengenregulierventil für Wasserarmaturen, insbesondere Drehschieber, mit einer im Ventilgehäuse drehbar gelagerten, mit dem Ventilverschlußglied verbundenen Ventilspindel, wobei auf dem Endbereich der aus dem Ventilgehäuse vorstehenden Ventilspindel ein Drehgriff zur Ventilbetätigung angeordnet und ein durch radiale Auslenkung lösbares Anschlagmittel zur Beschränkung der Öffnungsdrehbewegung des Drehgriffs ausgebildet ist.

Ein derartiges Ventil ist aus der DE-U-93 00 841.4 bekannt, wobei ein axial mit einer Gewindespindel bewegbares, in einem Gehäuse geführtes Verschlußelement vorgesehen ist. An dem aus dem Gehäuse vorstehenden Endbereich der Gewindespindel ist ein topfartiges, aus einem Drehgriff und einem Deckel bestehendes Betätigungselement befestigt. In dem Drehgriff ist an der radialen Mantelfläche ein vom Benutzer lösbarer Anschlag ausgebildet, der mit einem von der Mantelfläche des Drehgriffs verdeckten Anschlagelement zusammenwirkt. Hiermit soll bei der Öffnungsbewegung zunächst ein völliges Öffnen des Ventils verhindert werden. Bei dieser Ausbildung kann jedoch nicht ausgeschlossen werden, daß bei der Betätigung des Drehgriffs unbeabsichtigt der Drehanschlag mit gelöst wird.

Außerdem ist ein Mengenregulierventil, das in Form eines Drehschiebers in Sanitärarmaturen einsetzbar ist, aus der DE-A-31 27 738 bekannt, wobei eine mit der Ventilspindel drehbare Keramikventilscheibe vorgesehen ist, an der eine drehfest im Ventilgehäuse gehaltene Keramikventilsitzscheibe angelagert ist. Die beiden Ventilscheiben haben je eine Durchtrittsöffnung, so daß das Ventil bei einer Ventilspindeldrehung um 180° von der geschlossenen in die voll geöffnete Stellung bzw. in umgekehrter Reihenfolge bringbar ist. In den Endstellungen "geschlossen" und "voll geöffnet" ist jeweils ein Anschlag zwischen der Ventilspindel und dem Ventilgehäuse vorgesehen.

Ausserdem ist aus der DE-C-1 161 460 eine Sollwerteinstellvorrichtung bekannt, bei der ein einstellbarer Endanschlag vorgesehen ist. Hierbei ist ein Rastelement vorgesehen, welches an einer drehbar gehaltenen Stellscheibe ausgebildet ist.

Da die Ventilspindel nur über einen relativ kleinen maximalen Drehwinkel von 180° betätigbar ist, wird bei der Benutzung häufig, auch wenn es nicht erforderlich ist, das Ventil voll geöffnet, so daß nicht unerhebliche Mengen von Trinkwasser unnötig aus der Sanitärarmatur abgegeben werden.

Der Erfindung liegt die Aufgabe zugrunde, das im Oberbegriff des Anspruchs 1 angegebene Mengenregulierventil zu verbessern und so auszubilden, daß der Öffnungsgrad über den Drehwinkel sicher begrenzt wird. Hierbei gehört es mit zur Aufgabe, die Einrichtung bezüglich des Öffnungsgrads einstellbar zu gestalten und sie im Griffbereich in hygienischer und ästhetisch ansprechender Weise zu integrieren.

Diese Aufgabe wird erfindungsgemäß dadurch gelöst, daß ein separates Anschlaggehäuse drehfest zum Ventilgehäuse vorgesehen ist, wobei in dem Anschlaggehäuse ein vom Benutzer durch radiale Auslenkung lösbarer Drehanschlag im Bereich der Innenwandung des Anschlaggehäuses drehfest angeordnet ist, und der Drehgriff mit einer Anschlagnase mit dem Drehanschlag in Verbindung steht.

Weitere Ausgestaltungen der Erfindung sind in den Ansprüchen 2 bis 13 angegeben.

Mit den erfindungsgemäßen Maßnahmen wird mit einfachen Mitteln eine Drehanschlagausbildung geschaffen, die beim Öffnungsvorgang wirksam verhindert, daß durchgehend die maximale Ventilöffnung einstellbar ist. Hiermit kann ein erheblicher Wasserspareffekt erreicht werden. Dadurch, daß der Drehanschlag in dem drehfest am Ventilgehäuse angeordneten Anschlaggehäuse vorgesehen ist, wird sicher verhindert, daß beim Betätigen des Drehgriffs versehentlich auch der Drehanschlag mit ausgelenkt wird, was zur Folge haben würde, daß sofort in unerwünschter Weise die maximale Ventilöffnung einstellbar wäre.

In weiterer Ausgestaltung der Erfindung kann zweckmäßig das Anschlaggehäuse als rotationssymmetrische Hülse ausgebildet werden, deren Außendurchmesser etwa dem des Drehgriffs entspricht, wobei vorteilhaft der Drehgriff auf der Ventilspindel von einer Feder axial mit einer Stirnfläche gegen eine entsprechende Stimfläche des Anschlaggehäuses gestrammt wird, so daß ein harmonischer und dichter Übergang zwischen Drehgriff und Anschlaggehäuse ermöglicht wird.

Mit Vorteil kann das Anschlaggehäuse koaxial zum Ventilgehäuse des Mengenregulierventils, welches in einem Armaturenkörper eingeschraubt ist, angeordnet werden, wobei dann die rückwärts gelegene Stirnfläche des Anschlaggehäuses an einer entsprechenden Fläche des Armaturenkörpers anliegen kann. Die Fixierung in der Stecklage kann hierbei von einer auf einem Gewinde am Ventilgehäuse aufgeschraubten rohrförmigen Mutter erfolgen. Zur drehfesten Verbindung des Anschlaggehäuses mit dem Armaturenkörper können zweckmäßig ein oder mehrere Zapfen an dem Anschlaggehäuse ausgebildet sein, die in der Stecklage in entsprechende Bohrungen im Armaturenkörper einfassen.

Dadurch, daß der Drehgriff stufenlos oder feingestuft in unterschiedlichen Drehstellungen auf die Ventilspindel drehfest aufsetzbar ist, kann der Drehanschlag entsprechend den individuellen Wünschen oder Gegebenheiten eingestellt werden, da die Anschlagnase des Drehgriffs in Abhängigkeit von der aufgesteckten Drehposition des Drehgriffs früher oder später am Drehanschlag zur Anlage gelangt bezogen auf den Drehwinkel.

Ein Ausführungsbeispiel der Erfindung ist in der Zeichnung dargestellt und wird im folgenden näher beschrieben. Es zeigt
- Figur 1: ein für den Unterputzeinsatz ausgebildeten Armaturenkörper mit einem Mengenregulierventil, teilweise im Schnitt;
- Figur 2: das Mengenregulierventil gemäß Figur 1 in der Schnittebene II;
- Figur 3: das Mengenregulierventil gemäß Figur 2 beim Absperrdrehvorgang mit radial ausgelenktem Drehanschlag
- Figur 4: das in Figur 1 gezeigte Anschlaggehäuse im Schnitt;
- Figur 5: das in Figur 4 gezeigte Anschlaggehäuse um 90° gedreht in Seitenansicht;
- Figur 6: das in Figur 4 gezeigte Anschlaggehäuse in Rückansicht;
- Figur 7: das in Figur 4 gezeigte Anschlaggehäuse in Vorderansicht;
- Figur 8: den in Figur 1 gezeigten Drehgriff in der Schnittebene VIII der Figur 9;
- Figur 9: den in Figur 8 gezeigten Drehgriff in Blickrichtung vom Anschlaggehäuse;
- Figur 10: eine teilweise dargestellte Aufputzmischbatterie mit dem Mengenregulierventil teilweise im Längsschnitt.

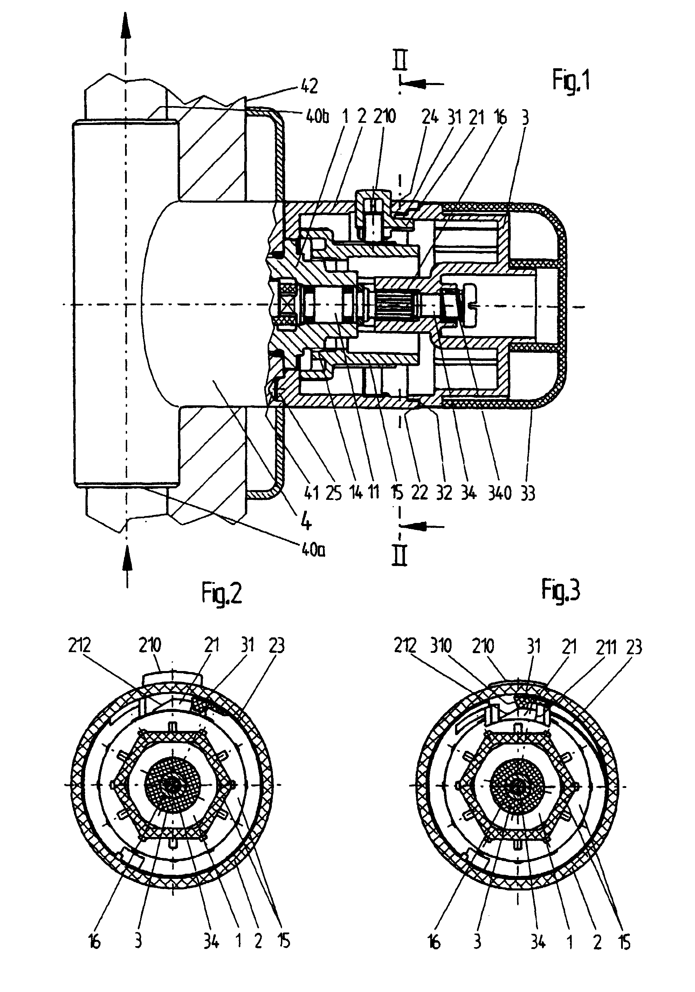

Das in Figur 1,2 und 3 gezeigte Mengenregulierventil ist mit einem Ventilgehäuse 1 in einem Armaturenkörper 4 für die Unterputzanordnung eingesetzt. Der Armaturenkörper 4 hat hierbei einen Zulaufkanal 40a und einen Ablaufkanal 40b, die über ein Drehschieberventil mit Keramikventilscheiben, wie es beispielsweise aus der Druckschrift DE 31 27 738 A1 bekannt ist, miteinander verbunden sind. Die Anordnung der Ventilscheiben ist in der Zeichnung nicht dargestellt. Hierbei ist in bekannter Weise die eine Ventilscheibe drehfest in dem Ventilgehäuse 1 gehaltert, während die zweite Ventilscheibe mit einer Ventilspindel 11 axial festliegend drehbar angeordnet ist. Beide Ventilscheiben haben je eine Durchtrittsöffnung für das Medium. Durch eine Drehung der Ventilspindel 11 um 180° können somit die beiden, jeweils in einer Hälfte der Ventilscheiben ausgebildeten Durchtrittsöffnungen, den Durchtritt vollkommen freigeben bzw. völlig absperren.

Das Ventilgehäuse 1 ist hierbei mit Gewinde in den Armaturenkörper 4 eingeschraubt, wobei ein Teil des Ventilgehäuses 1 aus der Stirnfläche des Armaturenkörpers 4 vorkragt. Konzentrisch in dem Ventilgehäuse 1 ist die drehbare Ventilspindel 11 gedichtet angeordnet und mit einem an der Mantelfläche eine Riefenverzahnung 16 aufweisenden Teil herausgeführt.

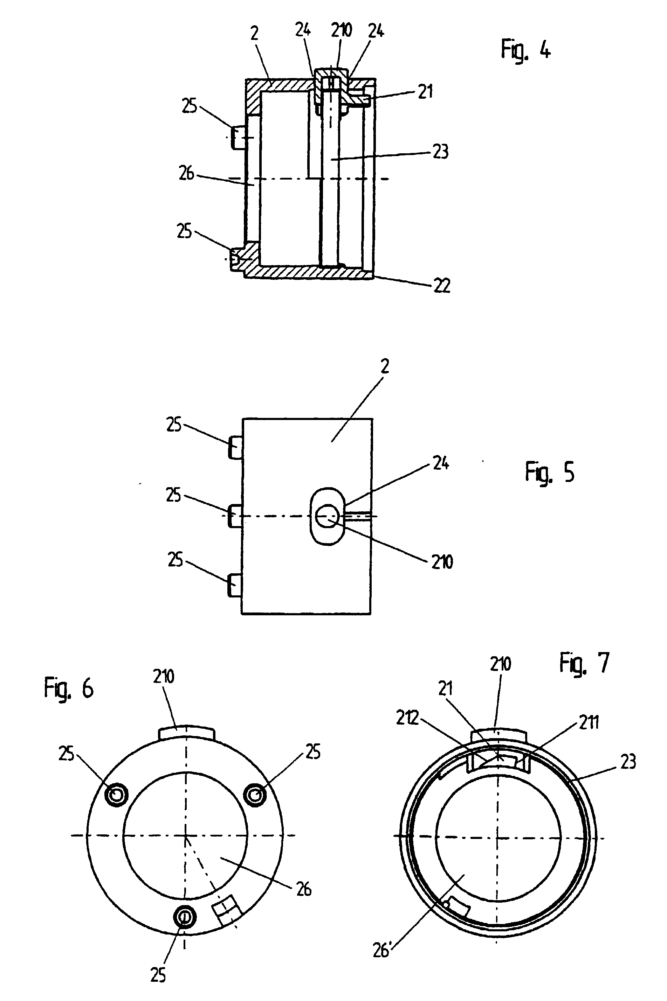

Koaxial zu dem vorkragenden Ventilgehäuse 1 ist ein Anschlaggehäuse 2 vorgesehen, welches mit einer Stimseite an einer aus einer Gebäudewand 42 vorstehenden Fläche des Armaturenkörpers 4 anliegt. Das Anschlaggehäuse 2 ist dabei hülsenförmig ausgebildet. Es hat eine etwa zylindrische Außenmantelfläche und eine flanschartig nach innen eingezogene Stirnseite für die Anlage an dem Armaturenkörper 4, wie es insbesondere aus den Figuren 4 bis 7 zu entnehmen ist. Die von dem flanschartig eingezogenen Bereich freigegebene Bohrung 26 ist dabei so bemessen, daß das Anschlaggehäuse 2 von einer rohrförmigen Mutter 15, die mittels Gewinde 14 an dem Ventilgehäuse 1 gehalten ist, gegen den Armaturenkörper 4 gepreßt wird. Zur drehfesten Sicherung des Anschlaggehäuses 2 am Armaturenkörper 4 sind außerdem drei Zapfen 25 an der flanschartigen Stirnseite ausgebildet, die in entsprechende Bohrungen 41 in der Stecklage einfassen.

Auf den vorstehenden Bereich der Ventilspindel 11 ist ein Drehgriff 3 mit Hilfe der Riefenverzahnung 16 drehfest aufsteckbar und mit einer in die Ventilspindel 11 eindrehbaren Schraube 34 in der Stecklage sicherbar. Damit der Drehgriff 3 spielfrei an der Wandung des Anschlaggehäuses 2 anliegt, ist außerdem eine Feder 340 vorgesehen, die sich einerseits an den Kopf der Schraube 34 und andererseits an einer Stimseite des Drehgriffs 3 abstützt, so daß der Drehgriff 3 in Richtung auf das Anschlaggehäuse 2 gedrückt wird. Zur Abdekkung der Schraube 34 ist außerdem eine Griffkappe 33 drehfest aufsteckbar.

Das hülsenförmige Anschlaggehäuse 2 und der Drehgriff 3 weisen etwa den gleichen Außendurchmesser auf und haben jeweils eine stimseitige Kreisringfläche 22,32, die ein Axiallager für den Drehgriff 3 bilden, der von der Feder 340 gegen das Anschlaggehäuse 2 gestrammt wird. Durch diese Ausbildung ist ein dichter, spaltfreier und harmonischer Übergang zwischen Drehgriff 3 und Anschlaggehäuse 2 ermöglicht.

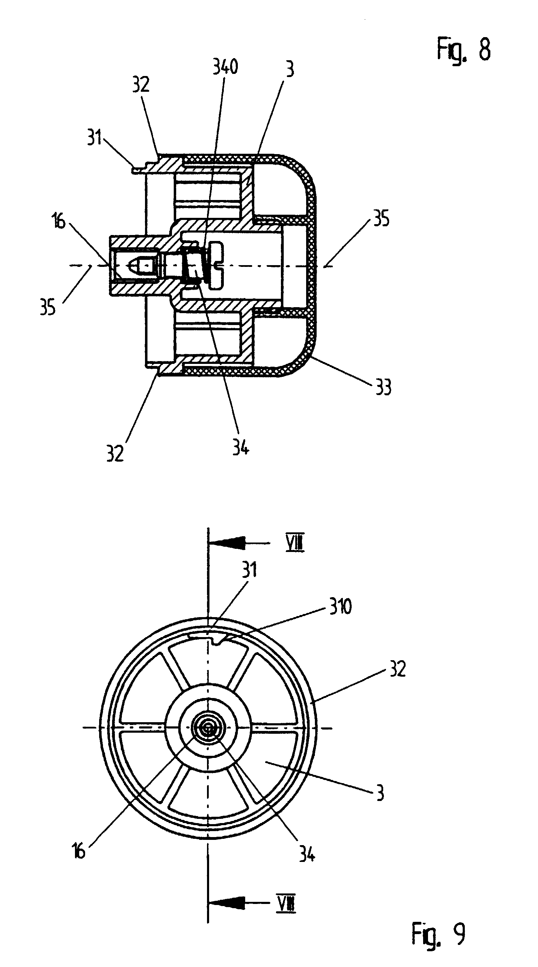

In dem Anschlaggehäuse 2 ist an der Innenwandung ein Drehanschlag 21 angeordnet, wie es insbesondere aus Figur 4 der Zeichnung zu entnehmen ist. Der Drehanschlag 21 ist dabei von einer blattförmigen Feder 23 radial nach außen gegen die Innenwandung gestrammt. In der Wandung des Anschlaggehäuses 2 ist eine Radialöffnung 24 ausgebildet, durch die eine Betätigungstaste 210, die einstückig an dem Drehanschlag 21 ausgebildet ist, hindurchgeführt ist, so daß der Drehanschlag 21 drehfest mit dem Anschlaggehäuse 2 verbunden ist. Der rohrförmige Mantelbereich der Mutter 15 ist hierbei so dimensioniert, daß er gleichzeitig als Begrenzung für die Eindrücktiefe der Betätigungstaste 210 in das Anschlaggehäuse 2 dient. Im Bereich der Kreisringfläche 32 ist stirnseitig an dem Drehgriff 3, wie es insbesondere aus Figur 8 und 9 zu entnehmen ist, eine axial vorstehende Anschlagnase 31 angeformt. Die Anschlagnase 31 ist dabei so plaziert, daß sie mit dem Drehanschlag 21 zusammenwirken kann. Es sei hierzu insbesondere auf Figur 2 und 3 der Zeichnung hingewiesen.

In der Figur 2 ist der Drehgriff 3 in seiner Anschlagstellung gezeigt, d.h. der Drehanschlag 21 liegt mit seiner Anschlagfläche 211 an einer leicht tangential zur Mittelachse 35 angeordneten Anschlagfläche 310 der Anschlagnase 31, so daß in dieser Stellung eine weitere Öffnungsdrehbewegung unterbunden ist. Erst wenn die Taste 210 radial in das Anschlaggehäuse 2 hineingedrückt wird, ist der Drehweg der Anschlagnase 31 wieder frei, so daß hiernach das Ventil in seine völlige Offenstellung gedreht werden kann.

Um, zum Beispiel bei Unkenntnis des Mechanismus, eine gewaltsame Zerstörung zu verhindern, ist die Anschlagfläche 310 der Anschlagnase 31 tangential zur Mittelachse angeordnet, so daß durch eine gewaltsame Drehung kurz bevor eine Zerstörung der Anschlagausbildung eintritt, der Drehanschlag 21 selbsttätig radial nach innen ausgelenkt und der Drehweg für die Anschlagnase 31 freigegeben wird.

Ein problemloses Zurückdrehen des Drehgriffs 3 von der voll geöffneten Ventilstellung in eine Schließposition wird dadurch erreicht, daß der Drehanschlag 21 an der der Anschlagfläche 211 gegenüberliegenden Seite eine abgeschrägte Seitenfläche 212 aufweist, die beim Absperr- oder Drosselvorgang eine selbsttätige, radiale Auslenkung bewirkt, so daß der Drehgriff 3 durchgehend von der voll geöffneten Stellung in die Schließstellung des Mengenregulierventils gedreht werden kann.

Der vom Benutzer durch radiale Auslenkung lösbare Drehanschlag 21 kann beliebig, entsprechend der feingestuften Riefenverzahnung 16, in dem gewünschten Öffnungsbereich plaziert werden. Hierbei wird zunächst das Mengenregulierventil in die gewünschte Öffnungsstellung gebracht und die Griffkappe 33 sowie die Schraube 34 entfernt. Nunmehr kann der Drehgriff 3 von der Ventilspindel 11 abgezogen werden und in der Drehstellung, in der die Anschlagnase 31 mit ihrer Anschlagfläche 310 an der Anschlagfläche 211 anliegt oder einen geringen Abstand aufweist, auf die Riefenverzahnung 16 der Spindel 11 wieder aufgeschoben werden. Nach dem Eindrehen der Schraube 34 und dem Aufstecken der Griffkappe 33 ist das Mengenregulierventil in der neu gewählten Anschlagposition wieder betriebsbereit.

Bei dem Ausführungsbeispiel gemäß Figur 1 ist das Mengenregulierventil in einem Armaturenkörper 4 einer Unterputzarmatur angeordnet. Selbstverständlich kann das Mengenregulierventil auch in anderen Unterputzarmaturen oder Aufputzarmaturen angeordnet werden.

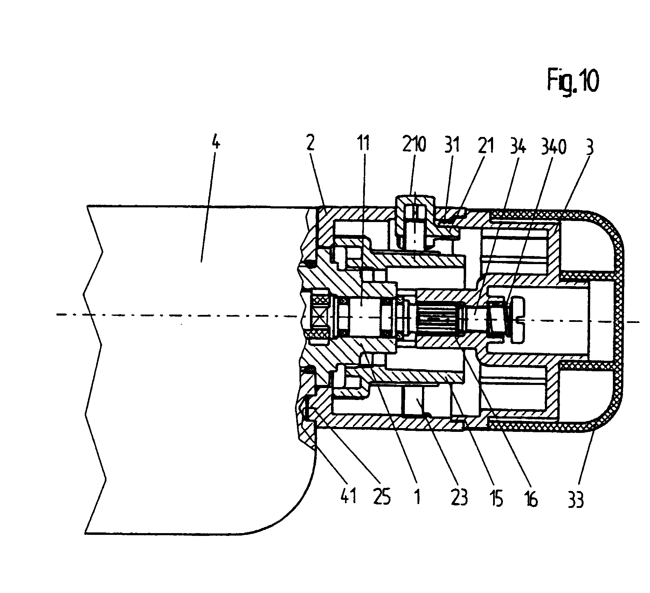

In Figur 10 ist das Mengenregulierventil in einer Aufputzmischbatterie angeordnet, wobei der waagerecht vor der Gebäudewand angeordnete Armaturenkörper 4 nur zum Teil dargestellt ist. Derartige Aufputzmischbatterien sind in großer Vielzahl bekannt und können mit gesteuerten oder thermostatgeregelten Mischeinrichtungen versehen sein.

Das vorstehend beschriebene Anschlaggehäuse 2 ist drehfest vom Armaturenkörper 4 gehalten. Selbstverständlich kann das Anschlaggehäuse auch so ausgebildet sein, daß es allein von dem Ventilgehäuse 1 gehalten ist. Hierbei kann das Anschlaggehäuse beispielsweise kraft- und/oder formschlüssig von einem am Ventilgehäuse 1 vorgesehenen Flansch gehalten werden.

Auch kann das Anschlaggehäuse, insbesondere an der dem Armaturenkörper 4 zugekehrten Seite, eine von der rotationssymmetrischen Form abweichenden Gestalt haben.

## Patentansprüche

1. Mengenregulierventil für Wasserarmaturen, insbesondere Drehschieber, mit einer im Ventilgehäuse (1) drehbar gelagerten, mit dem Ventilverschlußglied verbundenen Ventilspindel (11), wobei auf dem Endbereich der aus dem Ventilgehäuse (1) vorstehenden Ventilspindel (11) ein Drehgriff (3) zur Ventilbetätigung angeordnet und ein durch radiale Auslenkung lösbares Anschlagmittel zur Beschränkung der Öffnungsdrehbewegung des Drehgriffs (3) ausgebildet ist, dadurch gekennzeichnet, daß ein separates Anschlaggehäuse (2) drehfest zum Ventilgehäuse (1) vorgesehen ist, wobei in dem Anschlaggehäuse (2) ein vom Benutzer durch radiale Auslenkung lösbarer Drehanschlag (21) im Bereich der Innenwandung des Anschlaggehäuses (2) drehfest angeordnet ist, und der Drehgriff (3) mit einer Anschlagnase (31) mit dem Drehanschlag (21) in Verbindung steht.

2. Mengenregulierventil nach Anspruch 1, dadurch gekennzeichnet, daß das Anschlaggehäuse (2) und der Drehgriff (3) axial mit wenigstens einer Kreisringfläche (22,32) aneinanderliegen, wobei der Drehgriff (3) auf der Ventilspindel (11) axial begrenzt verschiebbar angeordnet und von einer an der Ventilspindel (11) abgestützten Feder (340) axial gegen das Anschlaggehäuse (2) gestrammt ist, so daß der Drehgriff (3) spaltfrei an dem Anschlaggehäuse (2) anliegt.

3. Mengenregulierventil nach Anspruch 1 oder 2, dadurch gekennzeichnet, daß in dem Anschlaggehäuse (2) der Drehanschlag (21) von einer Feder (23) radial gegen die Innenwandung gestrammt und von einer durch eine Radialöffnung (24) hindurchgeführte Betätigungstaste (210) drehfest gehalten ist, so daß durch Eindrücken der Betätigungstaste (210), entgegen der Kraft der Feder (23), der Drehanschlag (21) eine entsprechende Auslenkung erfährt und den Drehweg für die Anschlagnase (31) bis zur voll geöffneten Ventilstellung freigibt.

4. Mengenregulierventil nach einem der Ansprüche 1 bis 3, dadurch gekennzeichnet, daß das Anschlaggehäuse drehfest am Ventilgehäuse (1) befestigt ist.

5. Mengenregulierventil nach einem der Ansprüche 1 bis 3, dadurch gekennzeichnet, daß das Ventilgehäuse (1) vorkragend in einem Armaturenkörper (4) angeordnet ist, wobei koaxial zum vorkragenden Ventilgehäuse (1) das Anschlaggehäuse (2) an der Stirnfläche des Armaturenkörpers (4) befestigt ist und das Ventilgehäuse (1) durch eine Bohrung (26) in das Anschlaggehäuse (2) hineinragt.

6. Mengenregulierventil nach Anspruch 5, dadurch gekennzeichnet, daß an der Stirnseite des Anschlaggehäuses (2) ein oder mehrere vorkragende Zapfen (25) ausgebildet sind, die in der Stecklage in entsprechende Bohrungen (41) in den Armaturenkörper (4) einfassen und die Drehsicherung bewirken, wobei das Anschlaggehäuse (2) von einer auf ein Gewinde (14) des Ventilgehäuses (1) drehbaren, rohrförmigen Mutter (15) in seiner Stellung gehalten ist.

7. Mengenregulierventil nach einem der Ansprüche 1 bis 6, dadurch gekennzeichnet, daß das Anschlaggehäuse (2) als etwa rotationssymmetrische Hülse ausgebildet ist.

8. Mengenregulierventil nach einem der Ansprüche 1 bis 7, dadurch gekennzeichnet, daß der Drehgriff (3) oder ein Bereich des Drehgriffs mit der Anschlagnase (31) in unterschiedlichen Drehstellungen stufenlos oder feingestuft, drehfest auf der Ventilspindel (11) anordbar ist, so daß der radial auslenkbare Drehanschlag (21) in bezug auf den Öffnungsgrad des Mengenregulierventils einstellbar ist.

9. Mengenregulierventil nach Anspruch 8, dadurch gekennzeichnet, daß der Drehgriff (3) mit Hilfe einer feingestuften Riefenverzahnung (16) an der Ventilspindel (1) drehfest und axial verschiebbar gehalten ist.

10. Mengenregulierventil nach einem der Ansprüche 1 bis 9, dadurch gekennzeichnet, daß der Drehanschlag (21) an seiner der Anschlagfläche (211) gegenüberliegenden Seite eine abgeschrägte Seitenfläche (212) aufweist, die derart angeordnet und ausgebildet ist, daß beim Rückdrehen des Drehgriffs (3) von der voll geöffneten Ventilstellung in die Schließstellung der Drehanschlag (21) über die abgeschrägte Seitenfläche (212) zum freien Durchgang der Anschlagnase (31) von dieser entsprechend radial ausgelenkt wird und somit der Drehanschlag (21) nur in der Öffnungsdrehrichtung wirksam ist.

11. Mengenregulierventil nach einem der Ansprüche 1 bis 10, dadurch gekennzeichnet, daß die Anschlagfläche (310) der Anschlagnase (31) tangential zur Mittelachse (35) angeordnet ist, derart, daß bei einer gewaltsamen Betätigung des Drehgriffs (3) kurz vor einer Zerstörung der lösbaren Anschlagordnung der Drehanschlag (21) selbsttätig radial ausgelenkt wird und den Drehweg freigibt.

12. Mengenregulierventil nach einem der Ansprüche 1 bis 11, dadurch gekennzeichnet, daß der Drehanschlag (21) einstückig mit der Betätigungstaste (210) ausgebildet ist.

13. Mengenregulierventil nach einem der Ansprüche 1 bis 12, dadurch gekennzeichnet, daß die rohrförmige Mutter (15) mit ihrem Außenmantel die Eindrücktiefe der Betätigungstaste (210) im Anschlaggehäuse (2) begrenzt.

## Claims

1. Flow regulating valve for water fitments, especially rotary valve, having a valve spindle (11) which is rotatably mounted in the valve housing (1) and is connected to the valve closure member, a rotary knob (3) for valve actuation being arranged on the end region of the valve spindle (11) projecting out of the valve housing (1), and a stop means, releasable by means of radial deflection, being formed to limit the opening rotary movement of the rotary knob (3), characterized in that a separate stop housing (2) is provided so as to be non-rotatable with respect to the valve housing (1), a rotational stop (21) releasable by the user by means of radial deflection being non-rotatably arranged in the stop housing (2) in the region of the inside wall of the stop housing (2), and the rotary knob (3) engaging by a stop lug (31) the rotational stop (21).

2. Flow regulating valve according to Claim 1, characterized in that the stop housing (2) and the rotary knob (3) bear against each other axially with at least one circular surface (22, 32), the rotary knob (3) being arranged to be displaceable axially to a limited extent on the valve spindle (11) and being pressed axially against the stop housing (2) by a spring (340) supported on the valve spindle (11), so that the rotary knob (3) bears without a gap against the stop housing (2).

3. Flow regulating valve according to Claim 1 or 2, characterized in that in the stop housing (2) the rotational stop (21) is pressed radially against the inside wall by a spring (23) and is non-rotatably held by an actuating button (210) led through a radial opening (24), so that by pressing in the actuating button (210), against the force of the spring (23), the rotational stop (21) undergoes a corresponding deflection and frees the rotation path for the stop lug (31) as far as the fully opened valve position.

4. Flow regulating valve according to one of Claims 1 to 3, characterized in that the stop housing is non-rotatably secured to the valve housing (1).

5. Flow regulating valve according to one of Claims 1 to 3, characterized in that the valve housing (1) is arranged in a fitment body (4) so as to protrude, the stop housing (2) being secured coaxially with the protruding valve housing (1) on the end face of the fitment body (4) and the valve housing (1) projecting into the stop housing (2) through a bore (26).

6. Flow regulating valve according to Claim 5, characterized in that on the end face of the stop housing (2) one or more protruding pins (25) are formed which in the inserted position engage in corresponding bores (41) in the fitment body (4) and secure the stop housing against rotation, the stop housing (2) being held in its position by a tubular nut (15) rotatable on a thread (14) of the valve housing (1).

7. Flow regulating valve according to one of Claims 1 to 6, characterized in that the stop housing (2) is in the form of a sleeve approximately symmetrical in rotation.

8. Flow regulating valve according to one of Claims 1 to 7, characterized in that the rotary knob (3) or a region of the rotary knob with the stop lug (31) can be arranged non-rotatably on the valve spindle (11) in different continuously variable or finely graduated rotational positions so that the- radially deflectable rotational stop (21) is adjustable with respect to the degree of opening of the flow regulating valve.

9. Flow regulating valve according to Claim 8, characterized in that the rotary knob (3) is held by means of a fine groove toothing (16) on the valve spindle (1) so as to be fixed in rotation and axially displaceable.

10. Flow regulating valve according to one of Claims 1 to 9, characterized in that the rotational stop (21) has on the opposite side from the stop surface (211) a slanted lateral surface (212) which is so arranged and formed that, on rotation of the rotary knob (3) back from the fully opened valve position to the closed position, the rotational stop (21), by way of the slanted lateral surface (212), is correspondingly deflected radially by the stop lug (31) for free passage of the latter and thus the rotational stop (21) is effective only in the opening direction of rotation.

11. Flow regulating valve according to one of Claims 1 to 10, characterized in that the stop surface (310) of the stop lug (31) is arranged tangentially to the central axis (35) in such a way that, in the case of forceful actuation of the rotary knob (3), shortly before the releasable stop arrangement is destroyed the rotational stop (21) is automatically deflected radially and frees the rotation path.

12. Flow regulating valve according to one of Claims 1 to 11, characterized in that the rotational stop (21) is made in one piece with the actuating button (210).

13. Flow regulating valve according to one of Claims 1 to 12, characterized in that the tubular nut (15) limits with its outer surface the depth of penetration of the actuating button (210) in the stop housing (2).

## Revendications

1. Vanne de régulation de débit pour robinet d'eau notamment vanne rotative, comportant un corps (1) logeant à rotation une broche de vanne (11) reliée à l'organe d'obturation, et la zone d'extrémité de la broche (11) en saillie par rapport au corps (1) reçoit une poignée tournante (3) pour actionner la vanne ainsi qu'un moyen de montage amovible par débattement radial pour limiter la course de la rotation d'ouverture de la poignée (3),
caractérisée en ce qu'
un boîtier de montage (2), distinct, est prévu solidairement en rotation par rapport au corps (1) de la vanne, le boîtier de montage (2) ayant un montage de rotation (21) que l'utilisateur peut dégager par un débattement radial, cette butée étant prévue dans la zone de la paroi intérieure du boîtier de montage (2) et la poignée (3) coopère par un bec de butée (31) avec la butée de rotation (21).

2. Vanne de régulation de débit selon la revendication 1,
caractérisée en ce que
le boîtier de montage et la poignée tournante (3) sont appliqués l'un contre l'autre axialement par au moins une surface en anneau de cercle (22, 32), la poignée tournante (3) pouvant coulisser axialement de manière limitée sur la broche (11) en étant poussée par un ressort (340) appuyé contre la broche (11), axialement contre le boîtier de montage (2) pour que la poignée tournante (3) soit appliquée contre le boîtier de montage (2) sans laisser d'intervalle.

3. Vanne de régulation de débit selon la revendication 1 ou 2,
caractérisée en ce que
dans le boîtier de montage (2), la butée de rotation (21) est tendue par un ressort (23), radialement contre la paroi intérieure et est maintenue solidairement en rotation par un bouton de manoeuvre (210) traversant un orifice radial (24) de façon qu'en enfonçant le bouton de manoeuvre (210) contre la force développée par le ressort (23), la butée de rotàtion (21) soit déviée de manière correspondante et libère la course de rotation du bec de montage (31) jusqu'à la position d'ouverture totale de la vanne.

4. Vanne de régulation de débit selon l'une des revendications 1 à 3,
caractérisée en ce que
le boîtier de montage est fixé solidairement en rotation au corps (1) de la vanne.

5. Vanne de régulation de débit selon l'une des revendications 1 à 3,
caractérisée en ce que
le corps (1) est monté en saillie sur un corps de robinet (4), et coaxialement au corps (1) en saillie, le boîtier de montage (2) est fixé à la face frontale du corps de robinet (4) et le corps de vanne (1) pénètre dans le boîtier de montage (2) à travers un perçage (26).

6. Vanne de régulation de débit selon la revendication 5,
caractérisée en ce que
la face frontale du boîtier de montage (2) comporte un ou plusieurs tétons en saillie (25) venant s'enficher dans des perçages correspondants (41) du corps de robinet (4) et assurant le blocage en rotation, le boîtier de montage (2) étant maintenu dans sa position par un écrou (15) en forme de manchon vissé sur un filetage (14) du corps de vanne (1).

7. Vanne de régulation de débit selon l'une revendications 1 à 6,
caractérisée en ce que
le boîtier de montage (2) est en forme de manchon ayant sensiblement une symétrie de rotation.

8. Vanne de régulation de débit selon l'une des revendications 1 à 7,
caractérisée en ce que
la poignée tournante (3) ou une zone de la poignée tournante est prévue avec le bec de montage (31) dans les positions de rotation existantes, en continu ou à échelonnement fin, solidairement en rotation sur la broche de vanne (11) pour que la butée de rotation (21) qui se dévie radialement, puisse être réglée par rapport au degré d'ouverture de la vanne de régulation de débit.

9. Vanne de régulation de débit selon la revendication 8,
caractérisée en ce que
la poignée tournante (3) est maintenue solidairement en rotation et coulissant axialement sur la broche de vanne (1) par l'intermédiaire d'une denture moletée (16) à pas fin.

10. Vanne de régulation de débit selon l'une des revendications 1 à 9,
caractérisée en ce que
la butée de rotation (21) comporte sur son côté opposé à la surface de montage (211), une surface latérale (212) en biais disposée et réalisée de façon qu'en tournant la poignée (3) en arrière par rapport à la position d'ouverture totale, vers la position de fermeture, la butée de rotation (21) soit déviée radialement par la surface latérale en biais (212) pour permettre le passage libre du bec de montage (31), et que la butée de rotation (21) n'agisse que dans le sens de rotation correspondant à l'ouverture.

11. Vanne de régulation de débit selon l'une des revendications 1 à 10,
caractérisée en ce que
la surface de montage (310) du bec de montage (31) est tangente à l'axe médian (35) de façon qu'en cas de manoeuvre brutale de la poignée tournante (3), juste avant la destruction du dispositif de montage escamotable, la butée de rotation (21) est déviée radialement, automatiquement pour libérer la course de rotation.

12. Vanne de régulation de débit selon l'une des revendications 1 à 11,
caractérisée en ce que
la butée de rotation (21) fait corps avec le bouton de manoeuvre (210).

13. Vanne de régulation de débit selon l'une des revendications 1 à 12,
caractérisée en ce que
l'écrou tubulaire (15) délimite avec son enveloppe extérieure, la profondeur d'enfoncement du bouton de manoeuvre (210) dans le boîtier de montage (2).
